# EUROPEAN PATENT APPLICATION

(11) **EP 2 256 886 A2**
(43) Date of publication of application: **01.12.2010**
(21) Application number: 10177274.7
(22) Date of filing: 11.05.2006
(51) Int. Cl.: H02G 3/00

(54) **In-desk USB hub and connectivity system**

(30) Priority: 11.05.2005 US 127336
(62) Divisional of application: 09171247.1
(71) Applicant: Belkin International, Inc., Playa Vista, CA 90094 (US)
(72) Inventor: Mori, Kenneth, Los Angeles, CA 90065 (US); Sween, Barry, Santa Monica, CA 90404 (US); Razo, Vincent, Granada Hills, CA 91344 (US)
(74) Representative: Lawrence, John

(57) **Abstract**

A connectivity system capable of use with a desk (199) having a surface containing an aperture (120) includes a grommet (210, 610, 1010, 1210) and a connection hub (220, 620, 1020, 1220). The grommet has an interior surface (212, 612, 1012, 1212). The connection hub includes a connection port (221, 621, 1121, 1321) and a perimeter (222, 622, 1022, 1222). The surface of the desk defines a first plane (150) that forms a division between a first side (160) of the first plane and a second side (170) of the first plane. A portion of the perimeter of the connection hub is spaced apart from the interior surface of the grommet such that the perimeter and the interior surface define a passageway (310, 710, 720, 1070, 1080, 1270) therebetween through which a cable may be passed from the first side to the second side of the surface of the desk.

## Description

### Field of Invention

This invention relates generally to connectivity systems for computers and computer peripherals, and relates more particularly to such connectivity systems integrated with an item of furniture.

### Background of the Invention

The management of the various cables, cords, and wires found on a typical work surface is an ongoing challenge. Almost all of the increasing number of available devices, including telephones, computers and their many peripheral devices, digital cameras, personal digital assistants (PDAs), and so forth, use at least one and often multiple cables to transfer data, receive power, and/or perform other functions. Without some sort of management system, the number of cables on a desktop can quickly become a tangled mess that is both unsightly and unwieldy.

The increase in the number of peripheral and other devices has lead to the introduction of connection hubs, which are units having multiple connection ports contained in a single housing. A universal serial bus (USB) hub, for example, allows a user to transform a single USE port into two, three, four, or more USE ports by plugging a cable attached to the USE hub into the single USE port, thereby activating the multiple USE ports of the USE hub. Such hubs are convenient and useful, but only add to the clutter on the desktop, both because they introduce an additional cable and because the hub itself is another item that takes up space on the desktop. Accordingly, there exists a need for a connectivity system that both increases the available connection options on a desktop and also helps with cable management.

### Brief Description of the Drawings

The invention will be better understood from a reading of the following detailed description, taken in conjunction with the accompanying figures in the drawings in which:
FIG. 1 is a perspective view of a desk containing a connectivity system according to an embodiment of the invention;
FIG. 2 is a perspective view of a connectivity system according to an embodiment of the invention;
FIG. 3 is a perspective view of the connectivity system of FIG. 2;
FIG. 4 is a side view of the connectivity system of FIG. 2 according to an embodiment of the invention;
FIG. 5 is a side elevational view of the connectivity system of FIG. 2 according to an embodiment of the invention;
FIG. 6 is a perspective view of another connectivity system according to an embodiment of the invention;
FIG. 7 is a top view of the connectivity system of FIG. 6 according to an embodiment of the invention;
FIG. 8 is a front elevational view of the connectivity system of FIG. 6 according to an embodiment of the invention;
FIG. 9 is a side cross-sectional view of the connectivity system of FIG. 6 according to an embodiment of the invention;
FIGs. 10 and 11 are perspective views of yet another connectivity system according to an embodiment of the invention;
FIGs. 12 and 13 are top views of still another connectivity system according to an embodiment of the invention;
FIG. 14 is a perspective view of the connectivity system first shown in FIG. 6 according to an embodiment of the invention;
FIG. 15 is a perspective view of a grommet and a cap according to an embodiment of the invention;
FIG. 16 is a perspective view of another connectivity system according to an embodiment of the invention; and
FIG. 17 is a flow chart illustrating a method of assembling a connectivity system according to an embodiment of the invention.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical, mechanical, or other manner.

In one embodiment of the invention, a connectivity system capable of use with a desk having a surface containing an aperture comprises a grommet capable of being inserted into the aperture, and a connection hub capable of being inserted into the grommet. The grommet comprises a collar having an interior surface, and the connection hub comprises a connection port, a perimeter, and an electric cable electrically coupled to the connection port. The surface of the desk defines a first plane that forms a division between a first side of the first plane and a second side of the first plane opposite the first side of the first plane. A portion of the perimeter of the connection hub is spaced apart from the interior surface of the grommet such that the perimeter and the interior surface define a passageway therebetween through which a cable may be passed from the first side to the second side of the surface of the desk. The passageway makes such cable pass-through possible even when, as will often be the case, the connection hub is inserted in the grommet and thus occupies a portion of the aperture.

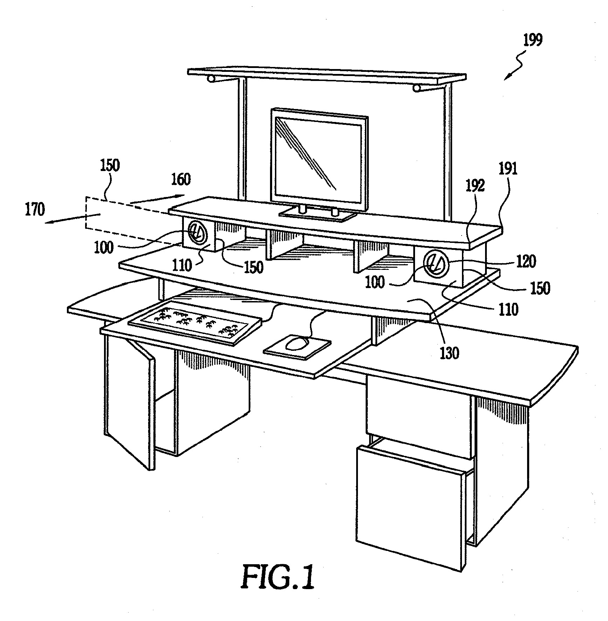

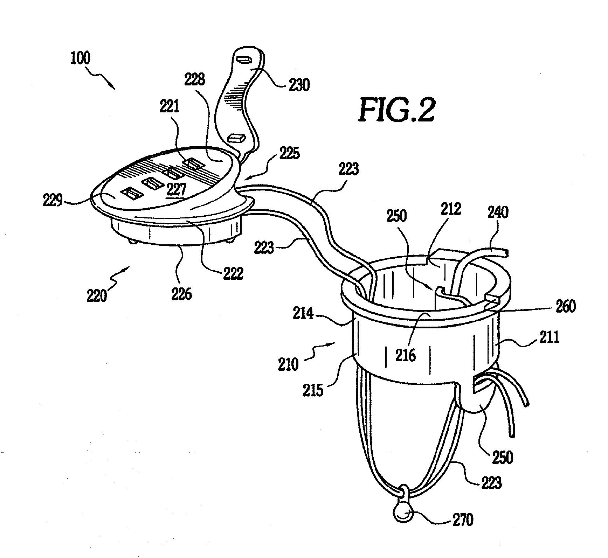

Referring now to the figures, FIG. 1 is a perspective view of a desk 199 containing a connectivity system 100 according to an embodiment of the invention. Connectivity system 100 is further described below, in connection with FIG. 2. As illustrated in FIG. 1, desk 199 comprises a surface 110 containing an aperture 120. As an example, aperture 120 can be a circular hole bored through surface 110, of the type that appears on many existing computer desks to be used for passing cables from one side of the desk to the other. Aperture 120, however, need not be circular, but can take any of several shapes, including rectangular, square, triangular, oblong, or some other regular or irregular shape.

Connectivity system 100 fits at least partially within aperture 120, and is thus integrated into desk 199. In the illustrated embodiment, surface 110 of desk 199 is a vertical surface, i.e., is oriented so as to be substantially perpendicular to the ground or other surface on which desk 199 rests, which other surface is defined herein to be a horizontal surface. In a non-illustrated embodiment, aperture 120 is located at a surface 130 or another horizontal surface of desk 199. Whatever its orientation, surface 110 of desk 199 defines, or is a portion of, a plane 150 that forms a division or dividing line between a side 160 and a side 170 of plane 150. As illustrated, a corner 191 of desk 199 lies on side 160 of plane 150, and a corner 192 of desk 199 lies on side 170 of plane 150, which places corners 191 and 192 on opposite sides of plane 150.

FIG. 2 is a perspective view of connectivity system 100 according to an embodiment of the invention. As illustrated in FIG. 2, connectivity system 100 comprises a grommet 210 capable of being inserted into aperture 120 (see FIG. 1), and a connection hub 220 capable of being inserted into grommet 210. Grommet 210 acts as a liner for aperture 120, giving aperture 120 a neat, finished appearance, and comprises a collar 211 having an interior surface 212.

Connection hub 220 comprises a connection port 221, a perimeter 222, and an electric cable 223 electrically coupled to connection port 221. Electric cable 223 can be a cable that carries data, electrical power, or both. The electrical connection between electric cable 223 and connection port 221 occurs inside connection hub 220, and thus is not explicitly shown in the drawings. As an example, connection port 221 can be a USB port, a FireWire port, a serial or parallel port, a voice and/or data jack such as an RJ-11, RJ-14, or RJ-45 jack, an alternating current (AC) power outlet, or any other outlet, jack, or port that may be useful to a user of desk 199 and connectivity system 100. As it is used herein, the word "port" encompasses not only ports but also jacks, outlets, and the like.

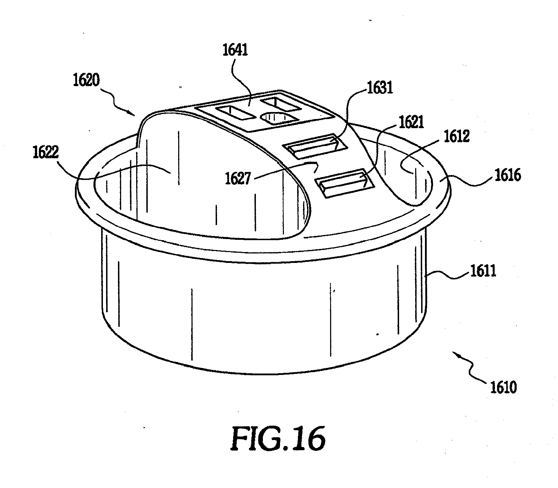

In the illustrated embodiment, connection port 221 is one of a plurality of connection ports, any of which can be the same as or similar to any of the outlets, jacks, or ports referred to above. Accordingly, connection hub 220 may contain two or more of the same type of outlet, or two or more different types of such outlets, jacks, and ports, in any combination. One of the many possible embodiments of this latter style of connection hub is shown in FIG. 16.

Connection hub 220 further comprises a surface 226 and a surface 227 spaced apart from surface 226. Connection port 221 is located on surface 227 of connection hub 220. In the illustrated embodiment, surface 226 is flat so that connection hub 220, having been temporarily removed from grommet 210, may be placed on a suitable surface, such as surface 130 of desk 199 (see FIG. 1). In that embodiment, electric cable 223 is physically coupled to and protrudes from a side of connection hub 220, and not from surface 226, so as to facilitate the placement of connection hub 220 on the suitable surface. The fact that connection hub 220 is removable from grommet 210 contributes to the functionality and ease of use of connectivity system 100. As an example, connection hub 220 may be moved from the location of grommet 210 to a position that may be more comfortable and/or more accessible to the user of connectivity system 100. As another example, large cords, adaptors, and other equipment that would not pass through grommet 210 with connection hub 220 in place therein may be able to pass through grommet 210 once connection hub 220 is removed.

Also in the illustrated embodiment, surface 227 is angled with respect to surface 226 such that surface 227 comprises a region 228 at a first distance from surface 226 and a region 229 located at a second distance from surface 226, where the first distance is greater than the second distance. The effect is that connection hub 220, whether placed on a vertical or horizontal surface, presents connection port 221 at a convenient location and angle for the user. Where connection port 221 is one of a plurality of connection ports, the slope or angle of surface 227 provides easy and convenient access to all of such ports because connection hub 220 can be oriented such that the ports that are farther away from the user are raised above the ports that are closer, in the same way that stadium seats that are farther from the field are raised above the seats that are closer.

Referring still to FIG. 2, connectivity system 100 further comprises a cover 230 coupled to grommet 210. In the illustrated embodiment, cover 230, when closed, overlies connection port 221 but leaves a portion of surface 227 exposed. In a different embodiment, cover 230 may overlie all of aperture 120 (see FIG. 1). As an example, cover 230 can comprise a flexible material such as an elastomeric or rubberized material, and can function to prevent dust from entering connection port 221, to lend a more aesthetically pleasing appearance to connectivity system 100, and/or to prevent damage to connection hub 220.

Collar 211 of grommet 210 comprises an end 214 and an end 215 opposite end 214. Grommet 210 further comprises a lip 216 coupled to end 214 of collar 211, and still further comprises a cable management feature 250 and a retention feature 260.

In the illustrated embodiment, cable management feature 250 comprises two components: a clip attached to interior surface 212 of grommet 210; and a loop or hook coupled to end 215 of grommet 210. The clip is capable of holding a cable 240 in place against interior surface 212 of grommet 210. As an example, the clip may have a fixed end that remains permanently attached to interior surface 212 and a free end that fastens with a snap or the like to interior surface 212 in order to facilitate the passage of cable 240 through the clip. The loop or hook, which can either be closed, as shown, or open like a J-hook, extends from end 215 and provides a location in which electric cable 223 and/or cable 240 can be neatly gathered and maintained.

As illustrated, retention feature 260 is a raised step that prevents connection hub 220 from turning side to side when connection hub 220 is placed in grommet 210. In a different embodiment, as illustrated and described in connection with a subsequent figure, the retention feature comprises a locking tab or the like capable of locking the connection hub in place within grommet 210. In a non-illustrated embodiment, connection hub 220 does not include a retention feature.

Connectivity system 100 further comprises a weight 270 coupled to electric cable 223. It was mentioned above that connection hub 220, in at least one embodiment, is movable from a location in grommet 210, where it will be said to be in a first position, to a different location outside of grommet 210 and possibly on surface 130 or another surface of desk 199 (see FIG. 1), where it will be said to be in a second position. As connection hub 220 is moved from the first position to the second position, electric cable 223, because it is attached to connection hub 220, will get pulled along with connection hub 220, and a portion of electric cable 223 will move from side 160 to side 170 of surface 110 (see FIG. 1). When connection hub 220 is moved from the second position to the first position, it is desirable that the above-mentioned portion of electric cable 223 move from side 170 back to side 160, thus disappearing from view underneath or behind surface 110. Such movement of electric cable 223, however, often does not take place without external assistance. Weight 270 provides such external assistance by dragging the portion of electric cable 223 into place on side 170 of surface 110, and removes the need for the user of connectivity system 100 to move the portion of electric cable 223 by hand. Weight 270 is chosen such that it is sufficient to move as described the portion of electric cable 223 during the transfer of connection hub 220 from the second position to the first position, but not sufficient to move the portion of electric cable 223 while connection hub 220 is in the second position. In other words, weight 270 is not sufficient to overcome the friction developed between surface 226 of connection hub 220 and the surface, such as surface 110 or surface 130, on which connection hub 220 is placed when in the second position.

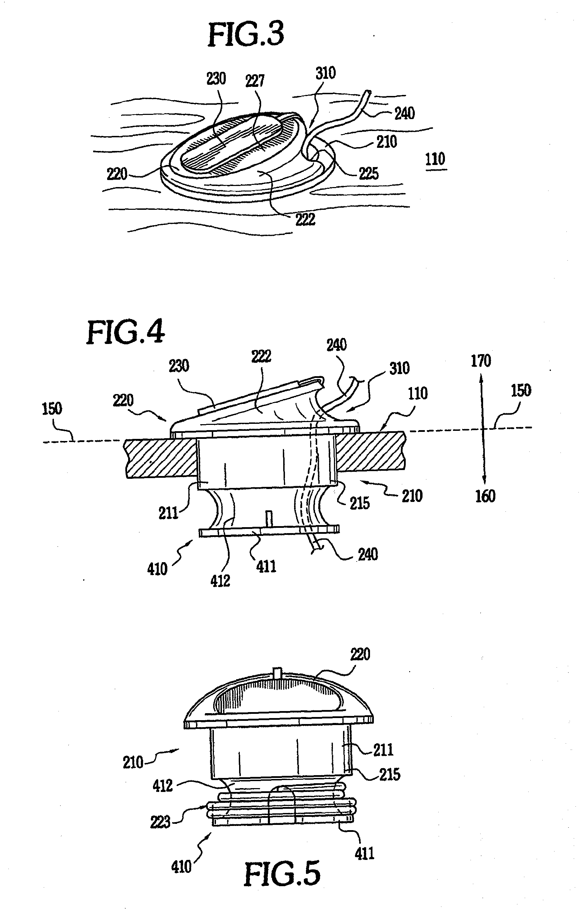

A portion 225 of perimeter 222 of connection hub 220 is spaced apart from interior surface 212 of grommet 210 such that portion 225 and interior surface 212 define a passageway therebetween. The passageway is not explicitly shown in FIG. 2, but can be seen in FIG. 3 and FIG. 4.

FIG. 3 is a perspective view and FIG. 4 is a side view of connectivity system 100 according to an embodiment of the invention. As illustrated in FIGs. 3 and 4, connection hub 220 rests within grommet 210, and grommet 210 is in aperture 120 (see FIG. 1). Note that while FIG. 1 depicts connectivity system 100 lying in a vertical plane, FIGs. 3 and 4 depict connectivity system 100 lying in a horizontal plane. Despite the difference in orientation, the surface in which connectivity system 100 is located is referred to as surface 110 in each of FIGs. 1, 3, and 4. A comparison of FIGs. 2 and 3 reveals that surface 226 is located on side 160 (see FIGs. 1 and 4) of surface 110 and that surface 227 is located on side 170 of surface 110 when connection hub 220 is located in aperture 120 (see FIG. 1).

Referring again to FIGs. 3 and 4, a passageway 310, referred to without a reference numeral in the preceding paragraph, is visible. Passageway 310 is created by the separation, first referred to above in connection with FIG. 2, between portion 225 of perimeter 222 of connection hub 220 and interior surface 212 of grommet 210. Cable 240 may utilize passageway 310 in order to pass from side 170 to side 160 of plane 150, i.e., in order to pass through aperture 120 (see FIG. 1) from one side of surface 110 to the other, even when connectivity system 100 is placed in aperture 120.

As illustrated in FIG. 4, connectivity system 100 further comprises an extension 410 coupled to end 215 of grommet 210. Extension 410 comprises a shelf 411 and a cord wrap region 412 between shelf 411 and end 215 of grommet 210. FIG. 5 is a side view of connectivity system 100 according to an embodiment of the invention. The side of connectivity system 100 shown in FIG. 5 is a different side from that illustrated in FIG. 4. FIG. 5 depicts extension 410 with electric cable 223 wrapper around cord wrap region 412. Electric cable 223 is prevented from falling off extension 410 by shelf 411.

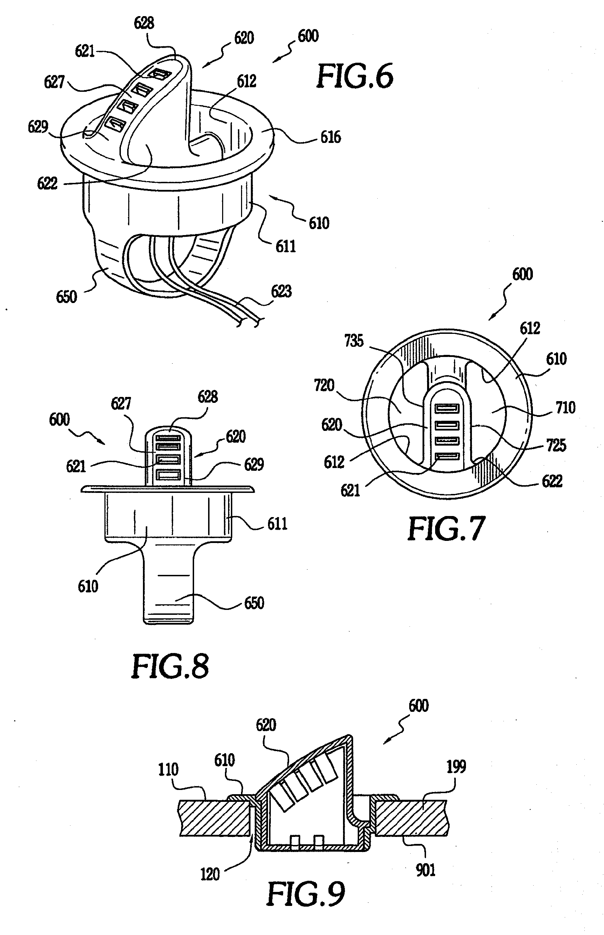

FIG. 6 is a perspective view of a connectivity system 600 according to an embodiment of the invention. Connectivity system 600 is similar in many respects to connectivity system 100, first shown in FIG. 1. As illustrated in FIG. 6, connectivity system 600 comprises a grommet 610 capable of being inserted into aperture 120 (see FIG. 1), and a connection hub 620 capable of being inserted into grommet 610. Grommet 610 comprises a collar 611 having an interior surface 612 and a lip 616. Connection hub 620 comprises a connection port 621, a perimeter 622, and an electric cable 623 electrically coupled to connection port 621. Connection hub 620 further comprises a surface 627 on which connection port 621 is located. As an example, grommet 610, collar 611, interior surface 612, lip 616, connection port 621, perimeter 622, and electric cable 623 can be similar to, respectively, grommet 210, collar 211, interior surface 212, lip 216, connection port 221, perimeter 222, and electric cable 223, all of which were first shown in FIG. 2. Similarly, surface 627 is similar to surface 227, first shown in FIG. 2, in that surface 627 is angled, this time with respect to lip 616, such that surface 627 comprises a region 628 at a first distance from lip 616 and a region 629 located at a second distance from lip 616, where the first distance is greater than the second distance. In the illustrated embodiment, grommet 610 comprises a cable management loop 650.

Referring now to FIG. 7, which is a top view of connectivity system 600 according to an embodiment of the invention, a portion 725 of perimeter 622 of connection hub 620 is spaced apart from interior surface 612 of grommet 610 such that portion 725 and interior surface 612 define a passageway 710 therebetween. As illustrated in FIG. 7, portion 725 of perimeter 622 comprises a first portion of perimeter 622, passageway 710 comprises a first passageway, and connectivity system 600 further comprises a passageway 720 defined by a separation between a portion 735 of perimeter 622 and interior surface 612 of grommet 610.

FIGs. 8 and FIG. 9 are, respectively, front elevational and side cross-sectional views of connectivity system 600 according to an embodiment of the invention. FIG. 8 illustrates the concept that a sloped or angled surface 627 allows easy access to all of the connection ports on surface 627, including connection port 621. FIG. 9 illustrates that grommet 610 and connection hub 620 are separate pieces that may be moved independently of each other. Desk 199 has a surface 901, which surface will be referred to again below.

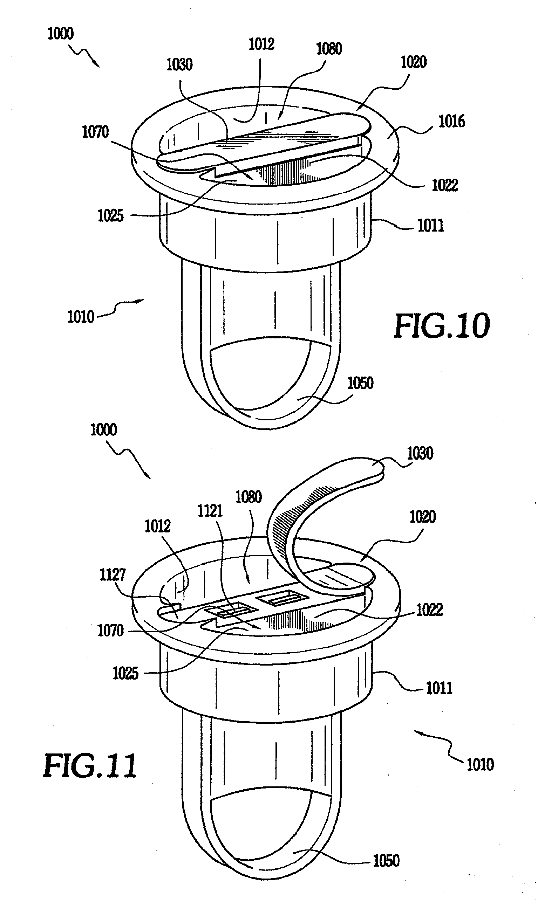

FIGs. 10 and 11 are perspective views of a connectivity system 1000 according to an embodiment of the invention. Connectivity system 1000 is similar in some respects to connectivity systems 100 and 600, as further detailed below. As illustrated in FIGs. 10 and 11, connectivity system 1000 comprises a grommet 1010 capable of being inserted into aperture 120 (see FIG. 1), and a connection hub 1020 capable of being inserted into grommet 1010. Grommet 1010 comprises a collar 1011 having an interior surface 1012 and a lip 1016. Connection hub 1020 comprises a connection port 1121, a perimeter 1022, and a cover 1030. As an example, grommet 1010, collar 1011, interior surface 1012, lip 1016, connection port 1121, perimeter 1022, and cover 1030 can be similar to, respectively, grommet 210, collar 211, interior surface 212, lip 216, connection port 221, perimeter 222, and cover 230, all of which were first shown in FIG. 2.

Perimeter 1022 of connection hub 1020 is spaced apart from interior surface 1012 of grommet 1010 such that a portion 1025 of perimeter 1022 and interior surface 1012 define a passageway 1070 therebetween. Connectivity system 1000 further comprises a passageway 1080 opposite passageway 1080. As an example, passageway 1070 can be similar to passageway 710, first shown in FIG. 7, and passageway 1080 can be similar to passageway 720, also first shown in FIG. 7. Grommet 1010 further comprises a cable management loop 1050.

Connection hub 1020 comprises a surface 1127 at which connection port 1121 is located. Surface 1127 defines or is a portion of a plane that is substantially parallel to plane 150 (see FIGs. 1, 3, and 4) when connection hub 1020 is located in grommet 1010 and grommet 1010 is located in aperture 120 (see FIGs. 1 and 9). The low profile design of connection hub 1020 helps conceal connectivity system 1000 within desk 199 (see FIG. 1).

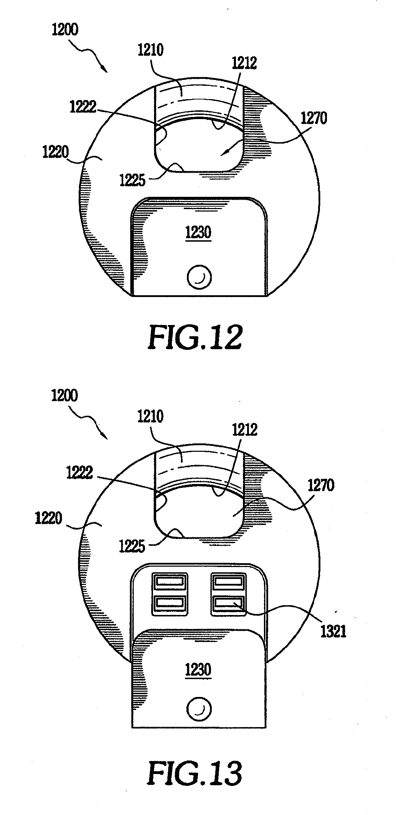

FIGs. 12 and 13 are top views of a connectivity system 1200 according to an embodiment of the invention. Connectivity system 1200 is at least somewhat similar to one or more of connectivity systems 100, 600, and 1000, as further detailed below. As illustrated in FIGs. 12 and 13, connectivity system 1200 comprises a grommet 1210, with an interior surface 1212, and a connection hub 1220 having a perimeter 1222, a cover 1230, and a connection port 1321. A portion 1225 of perimeter 1222 is spaced apart from interior surface 1212, thus forming a passageway 1270. As an example, grommet 1210, interior surface 1212, perimeter 1222, and connection port 1321 can be similar to grommet 210, interior surface 212, perimeter 222, and connection port 221, all of which were first shown in FIG. 2. Cover 1230 comprises a door coupled to connection hub 1220 and moveable between a first position in which connection port 1321 is covered (FIG. 12) and a second position in which connection port 1321 is exposed (FIG. 13).

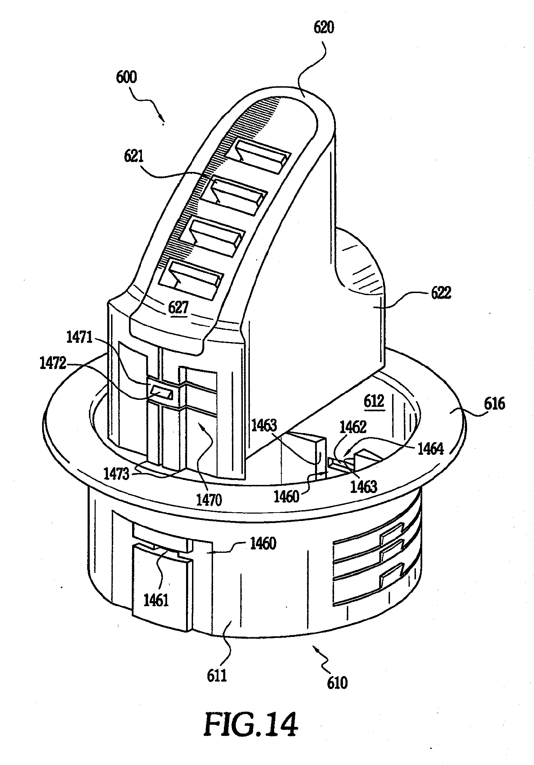

FIG. 14 is a perspective view of connectivity system 600 according to an embodiment of the invention. FIG. 14 depicts certain features of connection hub 620 and grommet 610 that were not visible in FIGs. 6-9. As illustrated in FIG. 14, connectivity system 600 comprises a retention feature 1460 comprising a slot 1461 and a slot 1462 in collar 611. Sidewalls 1463 protruding inward from interior surface 612 of collar 611 create a channel 1464. A similar channel located near slot 1461 is not visible in the drawing.

Retention feature 1460 works with a locking feature 1470 on connection hub 620 to retain connection hub 620 in grommet 610. Retention feature 1460 and locking feature 1470 perform the stated function regardless of the orientation-whether vertical, horizontal, or an angle in between-of the surface in which connection hub 620 is placed. Locking feature 1470 comprises a flexible tab 1471 having a raised portion 1472 capable of mating with slot 1461, and further comprises a beam 1473. A tab similar to flexible tab 1471 and a beam similar to beam 1473 are located substantially opposite flexible tab 1471 and beam 1473, but are not visible in the drawing. In one embodiment, retention feature 1460 comprises only a single channel and slot, and locking feature 1470 comprises only a single flexible tab, raised portion, and beam.

To insert connection hub 620 into grommet 610, beam 1473 is aligned with the counterpart of channel 1464, the counterpart of beam 1473 is aligned with channel 1464, and connection hub 620 is inserted into grommet 610, during which process flexible tab 1471 and its counterpart flex or bend such that raised portion 1472 and its counterpart are enabled to move with respect to interior surface 612 during the insertion of connection hub 620. When connection hub 620 reaches a certain depth within grommet 610, raised portion 1472 and its counterpart line up with slots 1461 and 1462, at which time raised portion 1472 and its counterpart relax from their flexed positions and snap into place in slots 1461 and 1462. Connection hub 620 is removed from grommet 610 by pressing or flexing flexible tab 1471 and its counterpart in order to remove raised portion 1472 and its counterpart from slots 1461 and 1462, thereby freeing connection hub 620 to be pulled out of grommet 610.

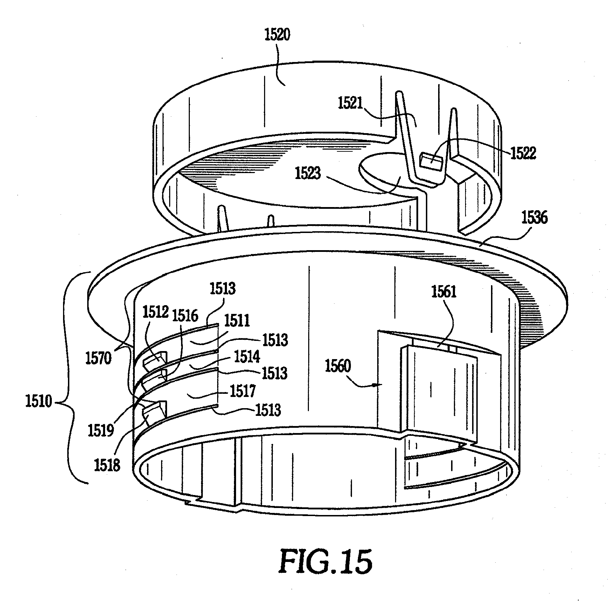

FIG. 15 is a perspective view of a grommet 1510 and a cap 1520 according to an embodiment of the invention. As an example, grommet 1510 can be similar to grommets 210, 610, 1010, 1210 first shown, respectively, in FIGs. 2, 6, 10, and 12. In particular, grommet 1510 can be similar to grommet 610 as it is depicted in FIG. 14, in that grommet 1510 comprises a retention feature 1560 with a slot 1561 that are similar to, respectively, retention feature 1460 and slot 1461 of FIG. 14. Grommet 1510 also comprises a lip 1536.

Cap 1520 is capable of being inserted into grommet 1510. As an example, cap 1520 can be inserted in grommet 1510 when no connection hub is occupying grommet 1510. Among other advantages, cap 1520 can give a finished look to a surface of a desk in which grommet 1510 is inserted. [0052] Cap 1520 comprises a locking arm 1521 having thereon a protrusion 1522 that is capable of mating with slot 1561 in a manner that is similar to the mating of slot 1461 and raised portion 1472 of flexible tab 1471 as described in connection with FIG. 14. In the illustrated embodiment, cap 1520 further comprises an access hole 1523 to enable the passage of cables or other items through grommet 1510 even when cap 1520 is in place in grommet 1510.

Grommet 1510 further comprises a flexible slat 1511 having a ledge 1512 protruding therefrom. Ledge 1512 is in physical contact with aperture 120 (see FIG. 1) when grommet 1510 is located in aperture 120. In the illustrated embodiment, grommet 1510 also comprises a flexible slat 1514 with a ledge 1516 and a flexible slat 1517 with a ledge 1518. A second grouping of three, or another number, of flexible slats is located substantially opposite flexible slat 1511 on grommet 1510.

Flexible slats 1511, 1514, and 1517 are bounded above and below by cuts 1513 that separate the flexible slats from the material of grommet 1510, thereby adding to the flexibility of the slats. This flexibility enables ledges 1512, 1516, and 1518 to move inward slightly when grommet 1510 is being inserted into or removed from aperture 120 (see FIG. 1), and to snap outward again when clear of aperture 120. This insertion and removal process works in a manner similar to the process described in connection with FIG. 14 regarding the insertion of connection hub 620 into grommet 610.

Referring still to FIG. 15, and again to FIG. 9, grommet 1510 is capable of being locked into desks having surfaces of various thicknesses. In particular, ledge 1518 will snap outward and engage surface 901 of desk 199 when desk 199 has a surface thickness substantially equal to a distance 1570 between lip 1536 and a top 1519 of ledge 1518. Grommet 1510 may be removed from aperture 120 by pressing on flexible slat 1517 so as to force ledge 1518 away from surface 901 and back into aperture 120, after which grommet 1510 may be pulled out of aperture 120. If desk 199 has a thickness somewhat less than distance 1570, ledge 1518 will extend out beyond surface 901, and ledge 1516 will engage surface 901. Similarly, if desk 199 has an even smaller thickness, ledges 1518 and 1516 will both extend out beyond surface 901, and ledge 1512 will engage surface 901. Even if desk 199 has a thickness that does not allow for one of ledges 1512, 1516, or 1518 to engage surface 901 as described, one or more of ledges 1512, 1516, and 1518 will still engage aperture 120, thereby creating friction that will help keep grommet 1510 in aperture 120.

FIG. 16 is a perspective view of a connectivity system 1600 according to an embodiment of the invention. Connectivity system 1600 is similar in many respects to connectivity system 100, first shown in FIG. 1. As illustrated in FIG. 16, connectivity system 1600 comprises a grommet 1610 capable of being inserted into aperture 120 (see FIG. 1), and a connection hub 1620 capable of being inserted into grommet 1610. Grommet 1610 comprises a collar 1611 having an interior surface 1612 and a lip 1616. Connection hub 1620 comprises a connection port 1621, a connection port 1631, a connection port 1641, and a perimeter 1622. Connection hub 1620 further comprises a surface 1627 on which connection port 1621 is located. As an example, grommet 1610, collar 1611, interior surface 1612, lip 1616, and perimeter 1622 can be similar to, respectively, grommet 210, collar 211, interior surface 212, lip 216, and perimeter 222, all of which were first shown in FIG. 2. Similarly, surface 1627 is similar to surface 627, first shown in FIG. 6, in that surface 1627 is angled 1616.

In the illustrated embodiment, connection ports 1621 and 1631 comprise a first type of connection port, such as a USB or a FireWire port, and connection port 1641 comprises an AC power outlet. As mentioned above, other embodiments having ports in various other arrangements and combinations are also possible.

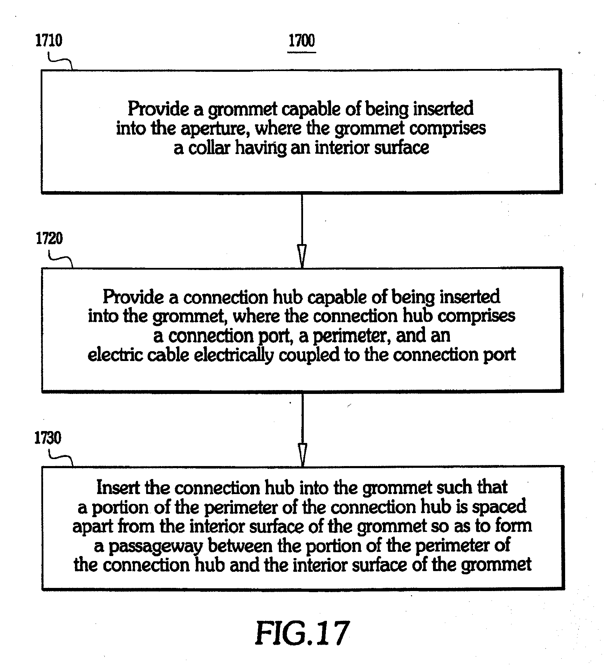

FIG. 17 is a flow chart illustrating a method 1700 of assembling a connectivity system capable of use with a desk having a surface containing an aperture according to an embodiment of the invention. A step 1710 of method 1700 is to provide a grommet capable of being inserted into the aperture, where the grommet comprises a collar having an interior surface. As an example, the connectivity system can be similar to one or more of connectivity systems 100, 600, and 1000. More specifically, the desk, the surface, and the aperture can be similar to, respectively, desk 199, surface 110, and aperture 120, all of which were first shown in FIG. 1. The grommet, the collar, and the interior surface can be similar to, respectively, grommet 210, collar 211, and interior surface 212, all of which were first shown in FIG. 2.

A step 1720 of method 1700 is to provide a connection hub capable of being inserted into the grommet, where the connection hub comprises a connection port, a perimeter, and an electric cable electrically coupled to the connection port. As an example, the connection hub can be similar to connection hub 220, first shown in FIG. 2. More specifically, the connection port, the perimeter, and the electric cable can be similar to, respectively, connection port 221, perimeter 222, and electric cable 223, all of which were first shown in FIG. 2.

A step 1730 of method 1700 is to insert the connection hub into the grommet such that a portion of the perimeter of the connection hub is spaced apart from the interior surface of the grommet so as to form a passageway between the portion of the perimeter of the connection hub and the interior surface of the grommet. As an example, the passageway can be similar to one or more of passageways 310, 710, 720, 1070, 1080, and 1270, first shown in FIGs. 3, 7, 7, 10, 10, and 12, respectively.

The invention is defined in the claims.

In many embodiments, the invention comprises a connectivity system capable of use with a desk having a surface containing an aperture, the connectivity system comprising:
a grommet capable of being inserted into the aperture, the grommet comprising a collar having an interior surface; and
a connection hub capable of being inserted into the grommet and comprising:
   a connection port;
   a perimeter; and
   an electric cable electrically coupled to the connection port;
wherein:
   the surface of the desk defines a first plane that forms a division between a first side of the first plane and a second side of the first plane opposite the first side of the first plane; and
   a portion of the perimeter of the connection hub is spaced apart from the interior surface of the grommet such that the perimeter and the interior surface define a passageway therebetween.

In some embodiments, the portion of the perimeter may comprise a first portion of the perimeter; the passageway may comprise a first passageway; and the connectivity system may further comprise a second passageway defined by a separation between a second portion of the perimeter and the interior surface of the grommet.

In various embodiments, the connection hub may further comprise:
a first surface;
a second surface spaced apart from the first surface; and
the connection port is located on the second surface of the connection hub.

In further embodiments, the first surface may define a second plane located on the first side of the first plane when the connection hub is located in the aperture; and the second surface may be located on the second side of the first plane when the connection hub is located in the aperture.

In some embodiments, the second surface may be angled with respect to the first surface such that the second surface comprises:
a first region at a first distance from the first surface;
a second region located at a second distance from the first surface; and
the first distance is greater than the second distance.

In some embodiments, the connection hub may comprise a second surface; the second surface of the connection hub defining a second plane substantially parallel to the first plane and located on the second side of the first plane when the connection hub is located in the aperture; and the connection port being located on the second surface of the connection hub.

In various embodiments, the connection port may be one of a plurality of connection ports; and the connection port may comprise a universal serial bus port.

In further embodiments, the connection hub may comprise a first surface; the first surface is substantially flat; and the connection hub may be removably coupled to the grommet.

In many embodiments, the collar may comprise a first end and a second end; and the grommet may comprise:
a lip coupled to the first end of the collar; and at least one of:
   a cable management feature; and
   a retention feature.

In some embodiments, the electric cable may be physically coupled to and protrudes from a sidewall of the connection hub; the cable management feature may comprise a clip attached to the interior surface of the grommet; and the clip may be capable of holding the electric cable in place against the interior surface of the grommet.

In further embodiments, the connectivity system may further comprise:
a weight coupled to the electric cable;
wherein:
the connection hub is moveable from a first position in the grommet to a second position on the surface of the desk;
the electric cable comprises a portion that is located on the first side of the first plane when the connection hub is in the first position and is located on the second side of the first plane when the connection hub is in the second position;
the weight is capable of moving the portion of the electric cable from the second side of the first plane to the first side of the first plane when the connection hub is moved from the second position to the first position; and
the weight is not capable of moving the connection hub when the connection hub is resting on the surface of the desk.

In various embodiments, the cable management feature may comprise a hook coupled to the second end of the collar.

In still further embodiments, the retention feature may comprise a slot in the collar; the connection hub further comprises a locking feature; and the locking feature comprises a flexible tab having a raised portion capable of mating with the slot.

In many embodiments, the connectivity system may further comprise:
a cap capable of being inserted into the grommet and comprising:
   a locking arm; and
   a protrusion on the locking arm;
wherein:
   the protrusion is capable of mating with the slot.

In some embodiments, the grommet may further comprise a flexible slat having a ledge protruding therefrom; and the ledge may be in physical contact with the aperture when the grommet is in the aperture.

In various embodiments, a desk may be provided comprising the connectivity system.

In many embodiments" the invention comprises a connectivity system capable of use with a desk having a surface containing an aperture, the connectivity system comprising:
a grommet capable of being inserted into the aperture, the grommet comprising a collar having an interior surface; and
a connection hub capable of being inserted into and removably coupled to the grommet and comprising:
   a first surface;
   a second surface spaced apart from the first surface by a sidewall;
   a connection port located on the second surface;
   a perimeter; and
   an electric cable electrically coupled to the connection port and protruding from the sidewall;
wherein:
   the surface of the desk defines a first plane that forms a division between a first side of the first plane and a second side of the first plane opposite the first side of the first plane;
   the first surface is substantially parallel to the surface of the desk;
   the connection hub is moveable from a first position in the grommet to a second position on the surface of the desk; and
   a portion of the perimeter of the connection hub is spaced apart from the interior surface of the grommet such that the perimeter and the interior surface define a passageway therebetween.

In some embodiments, the portion of the perimeter may comprise a first portion of the perimeter; the passageway may comprise a first passageway; and the connectivity system may further comprise a second passageway defined by a separation between a second portion of the perimeter and the interior surface of the grommet.

In still other embodiments, the first surface may be located on the first side of the first plane when the connection hub is located in the aperture; and the second surface may be located on the second side of the first plane when the connection hub is located in the aperture.

In further embodiments, the second surface may be angled with respect to the first surface such that the second surface comprises:
a first region at a first distance from the first plane; and
a second region located at a second distance from the first plane; and
the first distance is greater than the second distance.

In various embodiments, the second surface of the connection hub may define a second plane substantially parallel the first plane and located on the second side of the first plane.

In some embodiments, the connection port may be one of a plurality of connection ports; and the connection port may comprise a universal serial bus port.

In further embodiments, the collar may comprise a first end and a second end; and the grommet may further comprise:
a lid coupled to the first end of the collar; and at least one of:
   a cable management feature; and
   a retention feature.

In various embodiments, the cable management feature may comprise a clip attached to the interior surface of the grommet; the clip being capable of holding the electric cable in place against the interior surface of the grommet; the retention feature may comprise a slot in the collar; the connection hub may further comprise a locking feature; and the locking feature may comprise a flexible tab having a raised portion capable of mating with the slot.

In other embodiments, the grommet may further comprise a flexible slat having a ledge protruding therefrom; and the ledge is in physical contact with the aperture when the grommet is in the aperture.

In many embodiments, the connectivity system may further comprise:
a cap capable of being inserted into the grommet and comprising:
   a locking arm; and
   a protrusion on the locking arm;
   wherein:
   the protrusion is capable of mating with the slot.

The connectivity system may further comprise:
a weight coupled to the electric cable;
wherein:
   the electric cable comprises a portion that is located on the first side of the first plane when the connection hub is in the first position and is located on the second side of the first plane when the connection hub is in the second position;
   the weight is capable of moving the portion of the electric cable from the second side of the first plane to the first side of the first plane when the connection hub is moved from the second position to the first position; and
   the weight is not capable of moving the connection hub when the connection hub is resting on the surface of the desk.

In some embodiments, the connectivity system may further comprise a cover coupled to the grommet.

In various embodiments, the cover may be over the connection port but not over the passageway.

In further embodiments, the cover may be over the connection port, the passageway, and all of the aperture.

In still other embodiments, the cover may comprise a door coupled to the connection hub and moveable between a first position in which the connection port is covered and a second position in which the connection port is exposed.

In some embodiments, the cover may comprise a flexible material.

In various embodiments, the connectivity system may further comprise:
an extension coupled to the grommet;
   wherein the extension comprises:
   a shelf; and
   a cord wrap region between the shelf and the grommet.

In many embodiments, there is provided a desk comprising:
a surface containing an aperture; and
   a connectivity system comprising:
   a grommet capable of being inserted into the aperture, the grommet comprising a collar having an interior surface; and
   a connection hub capable of being inserted into the grommet and comprising:
      a connection port;
      a perimeter; and
      an electric cable electrically coupled to the connection port;
   wherein:
   a division between a first side of the first plane and a second side of the first plane opposite the first side of the first plane; and
   a portion of the perimeter of the connection hub is spaced apart from the interior surface of the grommet such that the perimeter and the interior surface define a passageway therebetween.

In many embodiments, there is provided a desk having a connectivity system in accordance with any aspect of the invention.

In many embodiments, the invention comprises a method of assembling a connectivity system capable of use with a desk having a surface containing an aperture, the method comprising:
providing a grommet capable of being inserted into the aperture, the grommet comprising a collar having an interior surface;
providing a connection hub capable of being inserted into the grommet and comprising:
   a connection port;
   a perimeter; and
   an electric cable electrically coupled to the connection port; and
inserting the connection hub into the grommet such that a portion of the perimeter of the connection hub is spaced apart from the interior surface of the grommet so as to form a passageway between the portion of the perimeter of the connection hub and the interior surface of the grommet.

Although the invention has been described with reference to specific embodiments, it will be understood by those skilled in the art that various changes may be made without departing from the spirit or scope of the invention. Various examples of such changes have been given in the foregoing description. Accordingly, the disclosure of embodiments of the invention is intended to be illustrative of the scope of the invention and is not intended to be limiting. It is intended that the scope of the invention shall be limited only to the extent required by the appended claims. For example, to one of ordinary skill in the art, it will be readily apparent that the connectivity system discussed herein may be implemented in a variety of embodiments, and that the foregoing discussion of certain of these embodiments does not necessarily represent a complete description

All elements claimed in any particular claim are essential to the invention claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims, unless such benefits, advantages, solutions, or elements are expressly stated in such claim.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A connectivity system to use with a desk having a surface containing an aperture to connect computer peripherals to a computer, the connectivity system comprising:
a grommet that is configured to be inserted into the aperture to act as a liner for the aperture, the grommet comprising:
a collar having an interior surface, a first end and a second end opposite the first end, and
a lip extending outward from the collar wherein, the lip extends outward from the collar at the first end;
and
a connection hub separate from the grommet that is configured to be inserted into the grommet, the connection hub comprising:
a connection port surface having multiple USB ports located on the connection port surface,
a bottom surface, and
a perimeter extending between the connection port surface and the bottom surface;
wherein:
when the connection hub is inserted into the grommet, at least part of the perimeter of the connection hub is spaced apart from the interior surface of the collar defining at least one passageway between the perimeter of the connection hub and the interior surface of the collar;
wherein the at least one passageway is configured to pass at least one cable of at least one device separate from the connectivity system through the aperture and through the desk surface.

2. A connectivity system of claim 1, wherein the first end has a first cross-sectional area and the second end has a second cross-sectional area, the first cross-sectional area being approximately equal to the second cross-sectional area, and when the connection hub is inserted in the grommet, the perimeter does not extend outside the collar of the first side.

3. A method of assembling a connectivity system to use with a desk having a surface containing an aperture and to connect computer peripherals to a computer, the method comprising:
providing a grommet that is configured to be inserted into the aperture to act as a liner for the aperture, the grommet comprising:
a collar having an interior surface, a first end, and a second end opposite the first end, and
a lip extending outward from the collar wherein, the lip extends outward from the collar at the first end;
providing a connection hub that is configured to be inserted into the grommet, the connection hub comprising:
a connection port surface having multiple USB ports located on the connection port surface wherein, when the connection hub is inserted into the grommet and the grommet is inserted into the aperture in the surface of the desk, the connection port surface is substantially flush with the lip and the lip is substantially flush with the surface of the desk,
a bottom surface, and
a perimeter extending between the connection port surface and the bottom surface;
inserting the connection hub into the grommet such that at least part of the perimeter of the connection hub is spaced apart from the interior surface of the collar defining at least one passageway between the perimeter of the connection hub and the interior surface of the collar;
wherein the at least one passageway is configured to pass cables through the aperture and through the desk surface.

4. A method according to claim 3, wherein the interior surface comprises a cross-section, wherein the cross-section is approximately constant and the method comprises inserting the connection hub into the grommet such that the perimeter does not extend outside the collar on the first side.

5. A connectivity system to use with a desk having a surface containing an aperture and to connect computer peripherals to a computer, the connectivity system comprising:
a grommet capable of being inserted into the aperture to act as a liner for the aperture, the grommet comprising:
a collar having an interior surface, a first end, and a second end opposite the first end, and
a lip extending outward from the collar wherein, the lip extends outward from the collar at the first end;
wherein the interior surface is configured to pass at least one cable of a device through the grommet and through the desk surface, the at least one cable comprising a first thickness and a second thickness;
and
a connection hub that is capable of being inserted into the grommet, the connection hub comprising:
a connection port surface having multiple USB ports located on the connection port surface,
a bottom surface, and
a perimeter extending between the connection port surface and the bottom surface;
wherein:
when the connection hub is inserted into the grommet, at least part of the perimeter of the connection hub is spaced apart from the interior surface of the collar defining at least one passageway between the perimeter of the connection hub and the interior surface of the collar;
wherein the at least one passageway is configured to pass at least the first thickness of the at least one cable through the aperture and through the desk surface;
when the connection hub is inserted into the grommet and the grommet is inserted into the desk, the connection hub is configured to be temporarily removable from the grommet to enable the passage of the first thickness of the at least one cable and the second thickness of the at least one cable through the grommet where the at least one passageway is too small to enable the passage of the second thickness of the at least one cable; and
the device is not the connection hub.

6. The connectivity system of claims 1-5 wherein the at least one passageway comprises a first passageway and a separate second passageway, each passageway being sized to pass cables through the desk surface.

7. The connectivity system of claims 1-6 wherein the grommet and the aperture are both circular and the collar is a circular cylinder.

8. The connectivity system of claims 1-7 wherein the connection port surface is curved.

9. The connectivity system of claims 1-8 wherein, when the connection hub is inserted into the grommet and the grommet is inserted into the aperture in a horizontal surface, the connection port surface is curved from a more vertical portion near the lip to a more horizontal portion farther from the lip.

10. The connectivity system of claims 1-9 wherein, when the connection hub is inserted into the grommet and the grommet is inserted into the aperture, the connection port surface is flat and the connection port surface is parallel to the surface of the desk.

11. The connectivity system of claims 1-10 wherein the interior surface of the grommet comprises multiple sidewalls protruding inward from the interior surface and defining ledges on the interior surface upon which the connection hub rests when inserted within the grommet when the grommet is inserted into the aperture.

12. The connectivity system of claims 1-11 wherein:
the interior surface of the grommet comprises multiple sidewalls protruding inward from the interior surface defining channels on the interior surface which align the connection hub when the connection hub is inserted within the grommet; and
the connection hub comprises multiple beams extending from the connection hub and configured to fit within the channels on the interior surface of the grommet to align the connection hub when the connection is inserted within the grommet.

13. The connectivity system of claims 1-12 wherein the interior surface of the grommet comprises multiple slots in the interior surface and wherein the connection hub comprises multiple flexible tabs having a raised portion configured to fit into the slots and to hold the connection hub in the grommet.

14. The connectivity system of claims 1-13 further comprising a desk wherein the surface of the desk is horizontal.

15. The connectivity system of claims 1-14 further comprising a desk wherein the surface of the desk is vertical.

16. The connectivity system of claims 1-15 wherein the multiple USB ports are in a line when viewed from above.

17. The connectivity system of claims 1-16 wherein, when the connection hub is inserted into the grommet and the grommet is inserted into the desk, the perimeter of the connection hub and the interior surface of the collar are substantially perpendicular to the connection port surface.
